# EUROPÄISCHE PATENTANMELDUNG

(11) **EP 0 814 368 A2**
(43) Veröffentlichungstag der Anmeldung: **29.12.1997**
(21) Anmeldenummer: 97105908.4
(22) Anmeldetag: 10.04.1997
(51) Int. Cl.: G02F 1/139, G02F 1/141, C09K 19/02

(54) **Elektrooptisches Material**

(30) Priorität: 21.06.1996 DE 19624769
(71) Anmelder: Deutsche Telekom AG, 53113 Bonn (DE)
(72) Erfinder: Dultz, Wolfgang, Prof.-Dr., 65936 Frankfurt/M (DE); Beresnev, Leonid, Dr., 117393 Moskau (RU); Bizadar, Ashok, Dr., Near H-3, Block, Vikaspuri, Neu-Delhi 18 (IN); Haase, Wolfgang, Prof.-Dr., 64354 Reinheim (DE)

(57) **Zusammenfassung**

Die Erfindung betrifft ein elektrooptisches Material, dessen optische Eigenschaften durch Anlegen eines äußeren elektrischen Feldes veränderbar sind.

Es sind ferroelektrische flüssigkristalline Materialien mit chiraler geneigter C-Phase sowie mit chiraler orthogonaler smektischer A-Phase bekannt, die infolge der kollektiven Reorientierung der Flüssigkristallmoleküle bei vorgegebener elektrischer Spannung eine relativ lange Reaktionszeit benötigen. Der Erfindung liegt die Aufgabe zugrunde, ein elektrooptisches Material mit kurzen Reaktionszeiten bei niedriger Ansteuerspannung zu schaffen. Dazu weist das elektrooptische Material einen lamellaren, ein oder mehrere Komponente enthaltenden Flüssigkristall (10) auf, in dem chirale Moleküle (20) mit vorbestimmter Konzentration eingebracht sind, deren Längsachsen (m) größer als die Längsachsen der den lamellaren Flüssigkristall bildenden Moleküle (10) sind, so daß die Längsachsen (m) der chiralen Moleküle (20) ohne äußeres elektrisches Feld statistisch um einen vorbestimmten Winkel (*θ*_{*m*}) gegen die Schichtnormale (z) des lamellaren Flüssigkristalls (10) geneigt sind.

## Beschreibung

Die Erfindung betrifft ein elektrooptisches Material zur Lichtmodulation, dessen optische Eigenschaften durch Anlegen eines äußeren elektrischen Feldes veränderbar sind, gemäß dem Oberbegriff des Anspruchs 1.

Es sind ferroelektrische Flüssigkristalle bekannt, die als elektrooptisches Material für die Herstellung optisch aktiver Elemente zur Informationsverarbeitung benutzt werden. Derartige optisch aktive Elemente sind beispielsweise Schalter, fiberoptische Kanäle, bei niedrigen Spannungen betriebene Abdunkler oder Modulatoren im Mikrosekundenbereich, schnell reagierende, optische Verzögerungselemente usw.

In der US-PS 4 367 924 und der US-PS 4 563 059 ist ein ferroelektrisches flüssigkristallines Material mit einer chiralen smektischen C-Phase beschrieben, mit dem ein Oberflächen-stabilisiertes ferroelektrisches Flüssigkristall (Surface Stabilized Ferroelectric Liquid Crystel, abgekürzt:SSFLC)-Bauelement hergestellt worden ist. Der optische Zustand des beschriebenen flüssigkristallinen Materials wird durch Anlegen eines äußeren elektrischen Feldes geändert. Dazu richten sich die Längsachsen der geneigten Flüssigkristallmoleküle entsprechend der Polarität des angelegten elektrischen Feldes kollektiv auf einer Konusfläche mit einem Öffnungswinkel, der dem doppelten Neigungswinkel der smektischen C-Phase des Flüssigkristalls entspricht in einer bevorzugeten Richtung aus. Infolge der kollektiven Reorientierung der langen Molekülachsen in der smektischen C-Phase ist die Reaktionszeit, das ist die optische Umschaltzeit des Flüssigkristalls, in dem SSFLC-Bauelement relativ lang. Zwar kann die Reaktionszeit grundsätzlich durch eine Erhöhung der Ansteuerspannung verkürzt werden; dem steht jedoch entgegen, daß die notwendige kleine Schichtdicke des Materials von etwa 1,5 µm höhere Spannungen verbietet.

In der US-PS 4 838 663 ist ein ferroelektrisches flüssigkristallines Material mit einer chiralen orthogonalen smektischen A-Phase beschrieben, das in einer sogenannten "Bookshelf"-Anordnung als elektrooptisches Material eingesetzt worden ist. Zwar zeigt dieses Material eine beim Anlegen eines elektrischen Feldes geringere Reaktionszeit im Mikro- und Submikrosekunden-Bereich, die nur gering von der anliegenden Spannung abhängt. Allerdings ist die optische Antwort klein. Beim Anlegen des elektrischen Feldes richten sich die Längsachsen der Moleküle wie die Längsachsen der Moleküle des Flüssigkristalls mit chiraler smektischer C-Phase entsprechend der Polarität des elektrischen Feldes kollektiv in einer bevorzugten Richtung aus. Allerdings erfolgt die Änderung des optischen Zustands hier durch das kollektive Neigen der langen Molekülachsen senkrecht zur Richtung des elektrischen Feldes. Dies ist auch als elektrokliner Effekt bekannt, der von S. Garoff und R. B. Meyer in Phys. Rev. Let., Band 38, Seite 848 (1977) beschrieben wurde.

Der Erfindung liegt daher die Aufgabe zugrunde, ein elektrooptisches Material zu schaffen, dessen optische Schaltzeit niedriger oder im Bereich der schnellsten herkömmlichen ferroelektrischen Flüssigkristalle liegt, aber deutlich niedrigere Ansteuerungsspannungen benötigt.

Dieses technische Problem löst die Erfindung mit den Merkmalen des Anspruchs 1.

Vorteilhafte Weiterbildungen sind in den Unteransprüchen umschrieben.

Die den beiden oben beschriebenen ferroelektrischen flüssigkristallinen Materialien anhaftenden Nachteile sind darin begründet, daß die Änderung ihrer optischen Eigenschaften unter Einfluß eines angelegten elektrischen Feldes mit einer kollektiven Reorientierung der Längsachsen der Flüssigkristallmoleküle und einer spontanen Polarisation in Zusammenhang steht. Der Grundgedanke der Erfindung ist darin zu sehen, ein elektrooptisches Material zu schaffen, bei dem die elektrooptischen Eigenschaften mehr durch eine Reorientierung einzelner Moleküle denn durch eine kollektive Reorientierung charakterisiert sind. Dazu enthält das elektrooptische Material einen lamellaren, ein oder mehrere Komponenten enthaltenden Flüssigkristall, in dem chirale Moleküle mit vorbestimmter Konzentration eingebracht sind. Die chiralen Moleküle sind in dem lamellaren Flüssigkristall gelöst. Die Längsachsen der als Dotierstoffe verwendeten chiralen Moleküle sind größer als die Längsachsen der den lamellaren Flüssigkristall bildenden Moleküle, so daß sie ohne äußeres elektrisches Feld statistisch um einen vorbestimmten Winkel gegen die Schichtnormale des lamellaren Flüssigkristalls geneigt sind.

Unter dem Ausdruck "lamellarer Flüssigkristall" ist in den Ansprüchen und in der gesamten Beschreibung ein schichtenartig aufgebauter Flüssigkristall zu verstehen, der sich in einer achiralen oder chiralen orthogonalen smektischen A-Phase, einer geneigten smektischen C-Phase oder einer lyotropen Phase befinden kann. Darüber hinaus kann der lamellare Flüssigkristall niedermolekular oder polymer aufgebaut sein. Der lamellare Flüssigkristall kann auch aus chiralen Verbindungen bestehen.

Jedes chirale Molekül weist wenigstens ein chirales Zentrum mit einem zur Schichtnormalen transversalen Dipolelement auf, das beim Anlegen eines äußeren elektrischen Feldes eine bevorzugte Richtung einnimmt. Dank dieser Maßnahme werden unter dem Einfluß eines angelegten äußeren elektrischen Feldes die Flüssigkristall-Moleküle nicht mehr kollektiv reorientiert, sondern vorwiegend die als Dotierstoff in den lamellaren Flüssigkristall eingebrachten chiralen Moleküle reorientiert.

Die Erfindung wird nachfolgend beispielhaft anhand einer Ausführungsform in Verbindung mit den beiliegenden Zeichnungen näher erläutert. Es zeigen:
- Fig. 1: in Seitenansicht einen stark vereinfacht dargestellten Ausschnitt einer Schicht eines erfindungsgemäßen elektrooptischen Materials mit einem in den lamellaren Flüssigkristall eingebrachten chiralen Molekül,
- Fig. 2a bis 2c: zwei Schichten des erfindungsgemäßen elektroopitschen Materials sowie die Ausrichtung der in den lamellaren Flüssigkristall eingebrachten chiralen Moleküle ohne angelegtes elektrisches Feld, mit einem negativen bzw einem postiven äußeren elektrischen Feld,
- Fig. 3: die Struktur zweier Molekülkomponenten, die den lamellaren Flüssigkristall bilden,
- Fig. 4: die Struktur eines Moleküls, das als chiraler Dotierstoff in den lamellaren Flüssigkristall nach Fig. 3 eingebracht ist,
- Fig. 5: die Temperaturabhängigkeit der spontanen Polarisation P_{S} des erfindungsgemäßen elektrooptischen Materials mit den in Fig. 3 und 4 gezeigten Strukturen,
- Fig. 6: die Temperaturabhängigkeit des Neigungswinkels θ des erfindungsgemäßen elektrooptischen Materials,
- Fig. 7: die Temperaturabhängigkeit der Schaltzeit τ des erfindungsgemäßen elektrooptischen Matreials,
- Fig. 8: die Spannungsabhängigkeit der spontanen Polarisation des erfindungsgemäßen elektrooptischen Materials mit den in Fig. 3 und 4 dargestellten Strukturen bei konstanter Temperatur für die smektische A-Phase,
- Fig. 9: die Spannungsabhängigkeit des Neigungswinkels θ des erfindungsgemäßen elektrooptischen Materials,
- Fig. 10: die Spannungsabhängigkeit der Schaltzeit τ des erfindungsgemäßen elektrooptischen Materials und,
- Fig. 11: die Temperaturabhängigkeit der Relaxationsfrequenz ν_{R} (T) in der Nähe des Phasenübergangs Smektisch C-Smektrisch A des erfindungsgemäßen elektrooptischen Materials.

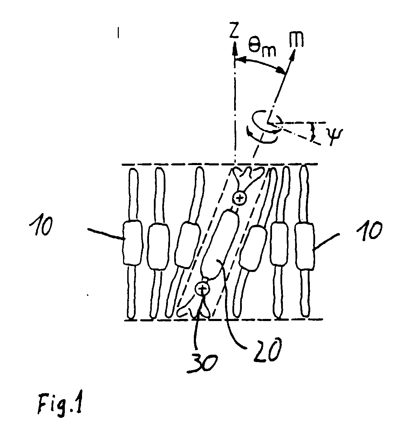

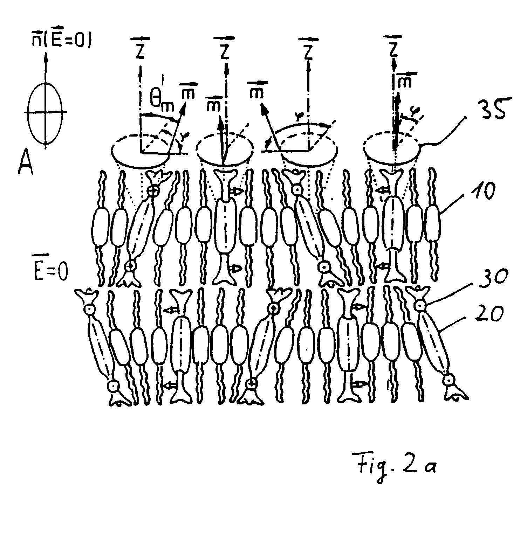

In Fig. 1 ist der Abschnitt einer einzigen Schicht eines lamellaren, d. h. schichtartigen Flüssigkristalls mit Molekülen 10 dargestellt. In dem lamellaren Flüssigkristall sind chirale, geneigte Moleküle 20 eingebracht, von denen in Fig. 1 der Einfachheit halber nur eines dargestellt ist. Die molekulare Längsachse m ("Lange Achse") des chiralen Moleküls 20 schließt mit der Schichtnormalen z des lamellaren Flüssigkristalls einen Neigungswinkel *θ*ₘ ein, der gezielt eingestellt werden kann. Das einzige in Fig. 1 gezeigte chirale Molekül weist zwei transversale Dipolmomente 30 entsprechend der Anzahl chiraler Zentren auf. Die beiden transversalen Dipolmomente 30 sind vorzugsweise innerhalb der Schichten des Flüssigkristalls und senkrecht zu der Ebene, die von der Schichtnormalen z und der Längsachse m des chiralen Moleküls 20 aufgespannt wird, orientiert. Das Plus-Zeichen weist darauf hin, daß das Dipolmoment senkrecht in die Blattebene zeigt. Die Ordnung der kurzen Molekülachse und der transversalen Dipolmomente 30 des geneigten chiralen Moleküls 20 wird durch die Behinderung einer Vibrationsbewegung ψ um die Längsachse des chiralen Moleküls begründet. Diese Behinderung hängt mit der monoklinen Umgebung der geneigten Moleküle mit chiralen Zentren zusammen. Da die Längsachse m des in den lamellaren Flüsigkristall eingebrachten chiralen Moleküls 20 länger ist als die Längsachsen der den lamellaren Flüssigkristall bildenden Moleküle 10, ist die Längsachse m des chiralen Moleküls 20 relativ zur Schichtnormale z um den Winkel θₘ geneigt. Im feldfreien Zustand, d. h. wenn kein äußeres elektrisches Feld angelegt ist, sind die Neigungsebenen der chiralen Moleküle 20 statistisch um die Oberfläche eines Konus 35 orientiert (s. Fig. 2a). Wie aus Fig. 2a ersichtlich ist, weisen die transversalen Dipolmomente 30 der chiralen Moleküle 20 in beliebige Richtungen senkrecht zur Schichtnormalen z.

Die optischen Eigenschaften des elektrooptischen Materials können sowohl im feldfreien Zustand als auch bei angelegtem elektrischen Feld durch die Längsachse n(E) eines Brechungsindexellipsoids relativ zur Schichtnormale z beschrieben werden. Ohne angelegtes elektrisches Feld kann der optische Zustand sowohl einer Schicht als auch aller Schichten des lamellaren Flüssigkristalls mit den eingebrachten chiralen Molekülen 20 durch ein uniaxiales (optisch einachsiges) Brechungsindexellipsoid "A" beschrieben werden. Das Ellipsoid wird durch die lange Achse n(E=0) charakterisiert, die entlang der Schichtnormalen z ausgerichtet ist (s. Fig. 2a). Die Neigungsebenen der chiralen Moleküle 20 werden durch den Azimutwinkel ϕ definiert, der, wie bereits erwähnt, ohne äußeres elektrisches Feld statistisch verteilt ist (s. Fig. 2a).

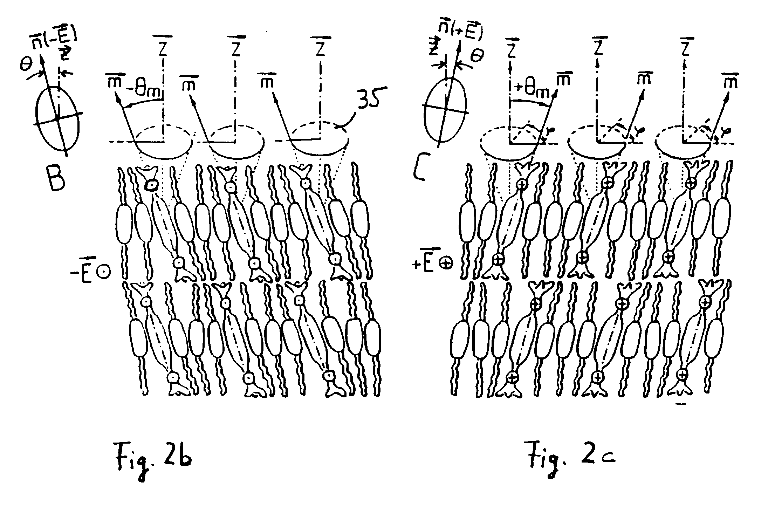

Wird ein elektrisches Feld mit negativer Polarität entlang der Schichten, d.h. senkrecht zur Schichtnormalen z, angelegt, orientieren sich die transversalen Dipolmomente 30 der chiralen Moleküle 20 parallel zum elektrischen Feld, wie dies in Fig. 2b dargestellt ist. In Fig. 2c ist die Ausrichtung der tranversalen Dipolmomente 30 der chiralen Moleküle 20 bei einem elektrischen Feld mit positiver Polarität dargestellt. Die optischen Eigenschaften des elektrooptischen Materials, das unter dem Einfluß eines äußeren elektrischen Feldes steht, lassen sich durch ein leicht biaxiales (optisch zweiachsiges) Ellipsoid für den Brechungsindex (s. "B" in Fig. 2b und "C" in Fig. 2c) beschreiben, dessen lange optische Achse n(E) um den Winkel θ von der Schichtnormalen z in der Ebene senkrecht zum elektrischen Feld abweicht. Die leichte Biaxialität tritt auf, da sich die optischen Eigenschaften aus der Überlagerung der Eigenschaften der geneigten chiralen Moleküle 20 und der Eigenschaften der weniger oder nicht geneigten Moleküle 10 des orthogonalen Flüssigkristalls ergeben. Die Neigungswinkel *θ* und θₘ werden durch das Vorzeichen des elektrischen Feldes bestimmt.

Dank des erfindungsgemäßen elektrooptischen Materials ist es möglich, die bei Bauelementen mit herkömmlichen ferroelektrischen Flüssigkristallen erzielten Schalt- oder Antwortzeiten mit deutlich niedrigeren Schaltspannungen zu erreichen. Um eine Modulationstiefe von 15 bis 20 % zu erreichen oder um einen Neigungswinkel θ von 5 bis 7° bei einer Schaltzeit von 2 bis 4 µs zu erhalten, wird für eine Zellendicke von 1,5 µm lediglich eine Spannung von 10 V benötigt. Im Vergleich dazu beträgt die Schaltspannung in Bauteilen, die auf dem elektroklinen Effekt beruhen, für vergleichbare Antwortzeiten 50 V und mehr (G. Andersson, I. Dahl, L. Komitov, M. Matuszczyk, S. T. Lagerwall, K. Skarp, B. Stebler, D. Coates, M. Chambers und D. M. Walba "Smectic A∗ Materials with 11,25 Degrees Induced Tilt Angle for Full Gray Scale Generation", Ferroelectrics, 114, 137-150 (1991); A. B. Davey und W. A. Crossland "Potential and Limitations of the Electroclinic Effect in Device Applications", Ferroelectrics, 114, 101-112 (1991)). Der Grund ist darin zu sehen, daß der optische Zustand des erfindungsgemäßen elektrooptischen Materials mehr von der Rotation separierter Moleküle 20 und weniger von der kollektiven Bewegung der Flüssigkristallmoleküle 10 abhängt, wie dies bei chiralen smektischen C*-Flüssigkristallen in oberflächenstabilisierten ferroelektrischen Flüssigkristallbauteilen bzw. in elektrooptischen Bauteilen auf der Grundlage der chiralen smektischen A∗-Phase in der orthogonalen Book-Shelf-Anordnung der Fall ist. Es ist daher sogar möglich, die Schaltzeiten in dem erfindungsgemäßen elektrooptischen Material bis in den Nanosekundenbereich zu reduzieren.

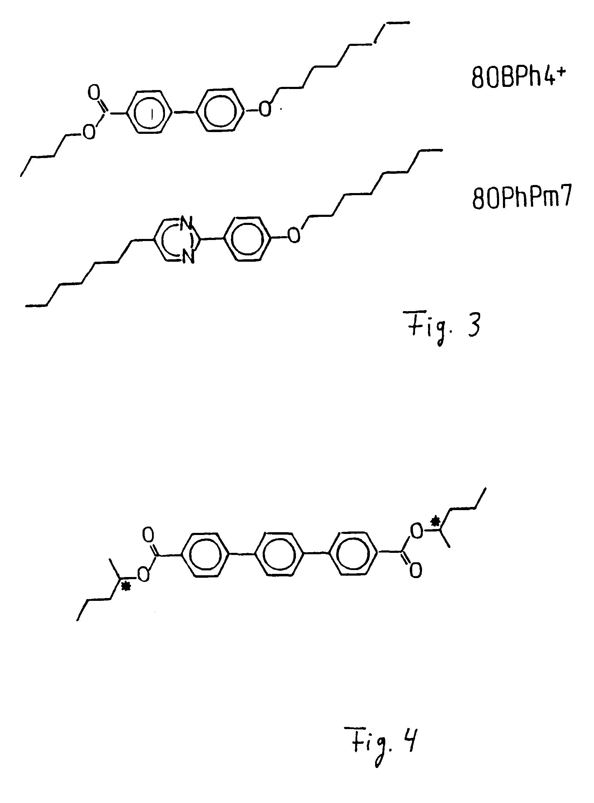

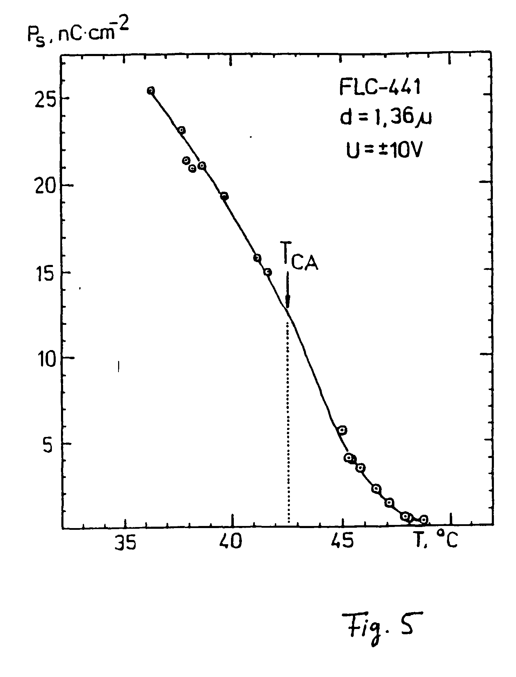

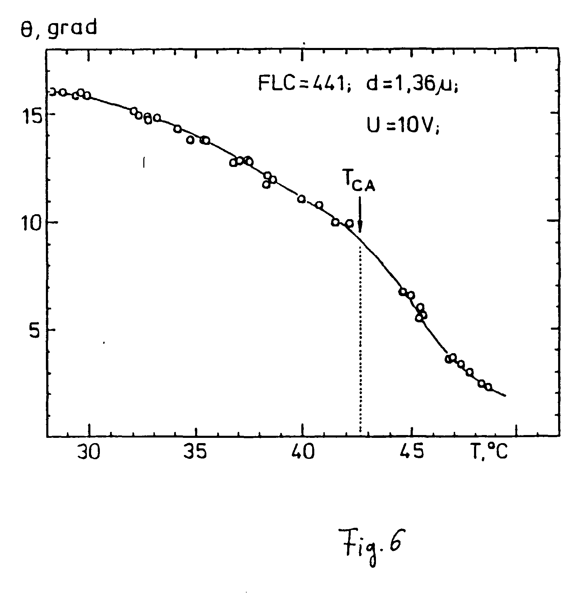

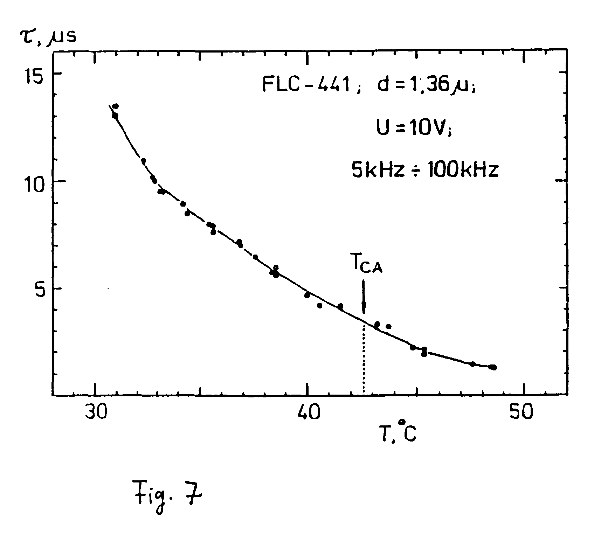

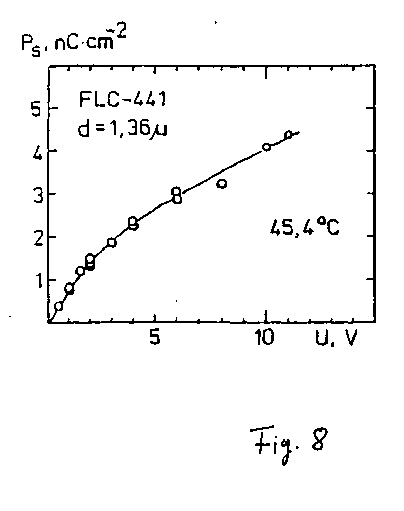

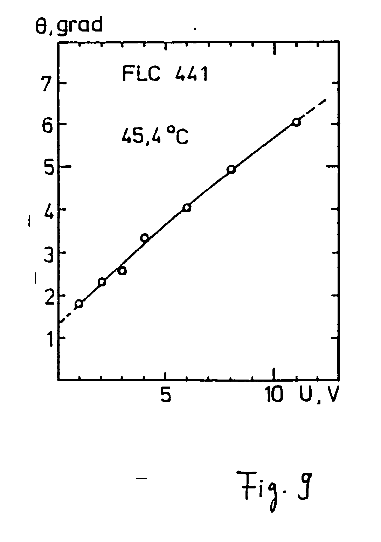

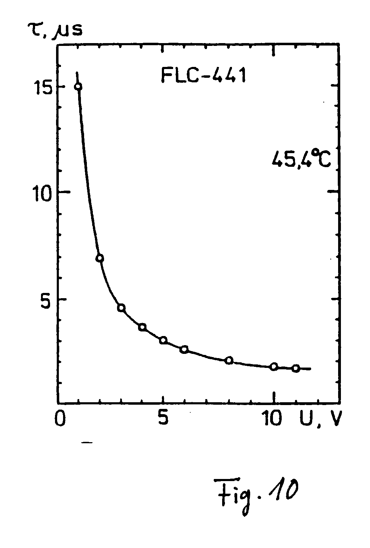

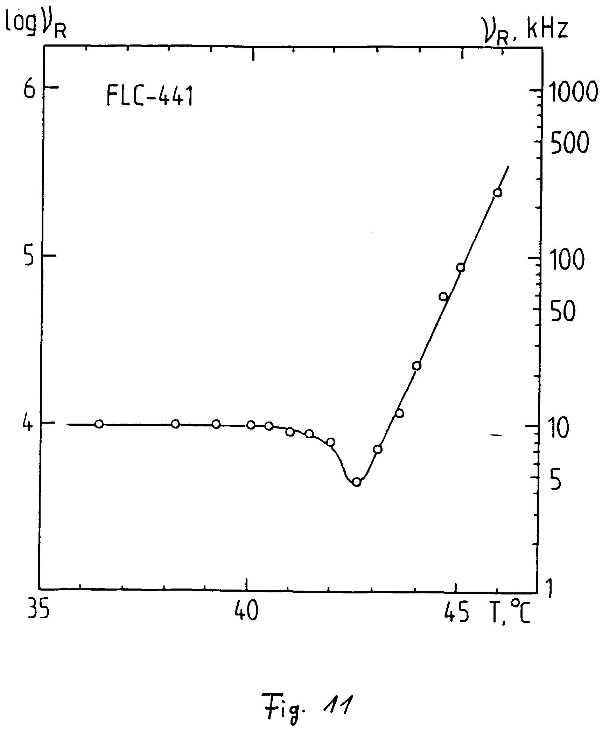

Die Wirkungsweise des erfindungsgemäßen elektrooptischen Materials konnte in einer Kapillarzelle aufgezeigt werden, die mit zwei transparenten Elektroden versehen ist und in der die Moleküle planar zur Oberfläche der Elektroden orientiert sind. Als lamellarer Flüssigkristall wurde eine Mischung aus nicht chiralen Komponenten 80 BPh4 und 80 PhPm7 verwendet. Die chemische Struktur des lamellaren Flüssigkristalls ist in Fig. 3 dargestellt. Dieser lamellare Flüssigkristall bildet eine smektische A-Phase aus. Als Dotierstoff wurden chirale Moleküle in den lamellaren Flüssigkristall eingebracht, deren Struktur in Fig. 4 dargestellt ist. Die mit Sternchen (∗) versehenen Stellen weisen jeweils auf ein chirales Zentrum des chiralen Moleküls 30 hin. Die Zusammensetzung bestand schließlich aus 45 Gew.% der Komponente 80 BPh₄ , 45 Gew.% der Komponente 80 PHPm₇ und einem 10%igen Gewichtsanteil chiraler Moleküle. Die orthogonale smektische A-Phase dieses elektrooptischen Materials liegt von 40,5°C bis 75°C vor. Die Temperatur 40,5°C des Übergangs von der smektischen C*-Phase in die smektische A*- Phase wurde als die Temperatur, bei der eine helikale Struktur erscheint, und als die Temperatur, bei der die dielektrsiche Absorption ε'' in der komplexen Dielektrizitätskonstante ein Maximum zeigt, bestimmt. Für letztere Messungen wurde eine oszillierende Spannung von 0,1 V und eine Zellendicke von 1,5 µm verwendet. Eine hohe optische Gleichförmigkeit bei einem durchschnittlichen Kontrast von 100 auf einer Fläche der Größenordnung von 1 cm² für die planar orientierte Flüssigkristallschicht wurde durch die Verwendung eines doppelten thermischen Gradienten während der Abkühlung des Flüssigkristalls von der isotropen zur smektischen A∗-Phase erreicht. Dabei verlief der erste Gradient senkrecht zur transparenten Platte und der zweite entlang der Flüssigkristallschicht. Zur Vororientierung des Flüssigkristalls wurde eine parallel geriebene Polyvinylalkohol-Beschichtung benutzt, die durch Aufschleudern aufgebracht wurde. Die induzierte elektrische Polarisation P_{S} wurde mittels der von K. Miyasato, S. Abe, H. Takezoe, A. Fukuda und E. Kuze beschriebenen Technik (Jap. J. Appl. Phys., 22, L661 (1983)) unter Verwendung von Dreieckspannungen gemessen. In Fig. 5 ist die Temperaturabhängigkeit der spontanen induzierten Polarisation P_{F} bei einer Zelldicke von 1,36 µm und einer angelegten Spannung von ± 10 V dargestellt. Der induzierte Neigungswinkel θ der optischen Indikatrix wurde nach dem von V. A. Baikalov, L. A. Beresnev und L. M. Blinov (Mol. Cryst. Liq. Cryst., 127, 397 (1985)) vorgeschlagenen Verfahren bestimmt. Dazu wurde die Kapillarzelle auf einem drehbaren Mikroskoptisch zwischen gekreuzten Polarisatoren befestigt und die Winkeldifferenz zwischen zwei Positionen mit minimaler Transmission gemessen, die den beiden gegensätzlichen Polaritäten der angelegten Rechteckspannung von 5-30 kHz entsprachen. Die so gemessene Temperaturabhängigkeit des Neigungswinkels θ der Mischung ist in Fig. 6 dargestellt. Die Anstiegs- und Abfallszeit τ des elektrooptischen Antwortsignals der Kapillarzelle wurde von Oszillogrammen zwischen 10 und 90 % der Maximalantwort gemessen. In Fig. 7 ist die Schaltzeit τ in Abhängigkeit von der Temperatur aufgetragen. Bei der konstanten Temperatur T=45,4°C wurden in der smektischen A*-Phase des erfindungsgemäßen Materials die Werte der elektrischen spontanen Polarisation P_{S}, des Neigungswinkels θ der Mischung und der Antwortzeit τ in Abhängigkeit von der angelegten Spannung gemessen. Die Meßergebnisse sind in den Fig. 8, 9 bzw. 10 dargestellt. Der Neigungswinkel θₘ ≠ 0 der chiralen Moleküle in dem smektischen A-Flüssigkristall wurde durch Extrapolation der Spannungsabhängigkeit des Neigungswinkels θ der Mischung bis zur Spannung 0 V bestimmt. Es ergab sich für θ(0*V*) ein Wert von etwa 1,5° (s. Fig. 9). Daraus läßt sich unter Berücksichtigung der Konzentration der chiralen Moleküle 20 von 10% und vergleichbarer Brechungsindizes für den chiralen Dotierstoff und den lamellaren Flüssigkristall ein molekularer Neigungswinkel θₘ von etwa 15° abschätzen. Die Spannungsabhängigkeit der Antwort-oder Schaltzeit τ des elektrooptischen Materials ist in Fig. 10 dargestellt. Sie ist charakteristisch für die Reorientierung geneigter chiraler Moleküle auf einem Konus (s. Fig. 2a, Bezugszeichen 35), die den Antwortzeiten in chiralen smektischen C-Phasen entspricht. In dem hier beschriebenen elektrooptischen Material findet die Reorientierung jedoch in der mit geneigten chiralen Molekülen dotierten smektischen A-Flüssigkristallzelle statt. Die molekulare Natur der Reoriencierung folgt ebenso aus der Temperaturabhängigkeit der Relaxationsfrequenzen υ_{R}(T), die sich aus den dielektrischen Relaxationsspektren des in Fig. 4 dargestellten Materials ergeben (s. Fig. 11). Der gemessene exponentielle Verlauf der Relaxationsfrequenzen ist charakteristisch für molekulare Relaxationsprozesse. Im Gegensatz dazu wäre für kollektive Relaxationsprozesse, wie z.B. Soft mode oder Goldstone mode, ein Curie-Weiss-Verhalten υ∼(*T*-*T*_{*c*}) zu erwarten.

Das erfindungsgemäße elektrooptische Material kann in elektrooptischen Bauteilen verwendet werden, in denen das Material beispielsweise zwischen Elektroden und Lichtpolarisierenden Schichten eingebettet wird. Eine mögliche Anordnung stellen, wie bereits erwähnt, Kapillarzellen dar.

## Patentansprüche

1. Elektrooptisches Material, dessen optische Eigenschaften durch Anlegen eines äußeren elektrischen Feldes veränderbar sind,
gekennzeichnet durch
einen lamellaren, ein oder mehrere Komponenten enthaltenden Flüssigkristall (10), in dem chirale Moleküle (20) mit vorbestimmter Konzentration eingebracht sind, deren Längsachsen (m) größer sind als die Längsachse der den lamellaren Flüssigkristall bildenden Moleküle (10), so daß die Längsachsen (m) der chiralen Moleküle (20) ohne äußeres elektrisches Feld statistisch um einen vorbestimmten Winkel (*θ*_{*m*}) gegen die Schichtnormale (z) des lamellaren Flüssigkristalls geneigt sind.

2. Elektrooptisches Material nach Anspruch 1, dadurch gekennzeichnet, daß jedes chirale Molekül (20) wenigstens ein chirales Zentrum mit einem zur Schichtnormalen (z) transversalen Dipolmoment (30) aufweist, das beim Anlegen eines äußeren elektrischen Feldes eine bevorzugte Richtung einnimmt.

3. Elektrooptisches Matreial nach Anspruch 1 oder 2, dadurch gekennzeichnet, daß der lamellare Flüssigkristall (10) in einer thermotropen smektischen Phase ist.

4. Elektrooptisches Material nach einem der Ansprüche 1 bis 3, dadurch gekennzeichnet, daß der lamellare Flüssigkristall (10) in einer orthogonalen smektischen Phase ist.

5. Elektrooptisches Material nach Anspruch 4, dadurch gekennzeichnet, daß der lamellare Flüssigkristall (10) in einer achiralen oder chiralen smektischen C-Phase ist.
